# NEUE EUROPÄISCHE PATENTSCHRIFT

(11) **EP 0 993 344 B2**
(45) Veröffentlichungstag und Bekanntmachung des Hinweises auf die Entscheidung über den Einspruch: **15.10.2008**
(45) Hinweis auf die Patenterteilung: 29.01.2003
(21) Anmeldenummer: 98941228.3
(22) Anmeldetag: 25.06.1998
(51) Int. Cl.: B06B 1/06

(54) **ULTRASCHALLWANDLER**
ULTRASONIC TRANSDUCER
TRANSDUCTEUR ULTRASONORE

(30) Priorität: 30.06.1997 DE 19727877
(43) Veröffentlichungstag der Anmeldung: 19.04.2000
(73) Patentinhaber: ROBERT BOSCH GMBH, 70442 Stuttgart (DE)
(72) Erfinder: WANNKE, Dietmar, D-72768 Reutlingen (DE); KARR, Dieter, D-75233 Tiefenbronn (DE); FEHSE, Meike, D-71229 Leonberg (DE); NOLL, Martin, D-76461 Muggensturm (DE); RAPPS, Peter, D-76227 Karlsruhe (DE); ERNST, Waldemar, D-71665 Vaihingen (DE); SCHMID, Dirk, D-71272 Renningen (DE)
(86) Internationale Anmeldenummer: PCT/DE1998/001734
(87) Internationale Veröffentlichungsnummer: WO 1999/001234

(56) Entgegenhaltungen:
- EP-A- 0 075 302
- EP-A- 0 283 823
- EP-A- 0 678 853
- DE-A- 3 324 575
- DE-A- 3 441 684
- DE-A- 3 941 933
- DE-A- 4 120 681
- DE-A- 4 215 271
- DE-C- 351 626
- US-A- 3 638 052
- US-A- 3 890 423
- US-A- 3 943 388
- US-A- 4 607 186
- US-A- 4 823 042

## Beschreibung

### Stand der Technik

Die Erfindung geht aus von einem Ultraschallwandler mit einem topfähnlichen Gehäuse nach der Gattung des Hauptanspruchs. Aus der EP 0075302 B1 ist bereits ein Ultraschallwandler bekannt, der ein topfförmiges Gehäuse aufweist. Auf der Innenseite ist auf dem Topfboden ein piezokeramisches Schwingelement aufgebracht. Um Oberwellen zu dämpfen und die Ausbreitungs- bzw. Empfangskeule dieser Anordnung zu formen, sind an der Innenseite des topfförmigen Wandlergehäuses an zwei gegenüberliegenden Seiten kreisabschnittsförmige Dämpfungskörper angebracht. Zur Befestigung wird der Ultraschallwandler in ein Gehäuse aus Weichplastik oder Weichgummi eingebracht. Ungünstig bei dieser Konstruktion ist, daß durch die gleichmäßige Wanddicke des topfförmigen Gehäuses nicht nur die Membran, sondern auch die Gehäusewandung zur Schwingung angeregt wird, so daß sowohl die Sende- als auch die Empfangskeule durch Überlagerung von Oberwellen ungünstig beeinflußt bzw. ausgelöscht wird.

Aus der EP 678 853 A2 ist ein Ultraschallwandler mit einer asymmetrischen Strahlungscharakteristik bekannt. Um die gewünschte, parallel zur Bodenfläche fächerförmig verlaufende Strahlungscharakteristik zu erhalten, wird aus dem membranseitigen Ende des Wandlertopfes in Einbaurichtung oben und unten jeweils ein kreissegmentförmiges Stück herausgenommen bzw. eine Ausnehmung in die Membran eingeformt. Aus der US 4,823,042 ist ein Ultraschallwandler für eine medizinische Therapie bekannt, wobei an dem Wandlertopf ein Gewinde angeordnet ist, mit dem der Ultraschallwandler an einem Handgriff befestigt werden kann. Auf der einer Frontfläche gegenüberliegenden Seite ist ein piezoelektrischer Kristall zur Schwingungserzeugung angeordnet. Aus der US 3,638,052 ist ein elektroakustischer Wandler bekannt, bei dem eine Schwingungsmembran in einer kreisförmigen Öffnung eines festen Gehäuses angeordnet ist. Durch die Ausgestaltung der Schwingungsmembran wird die Abstrahlcharakteristik des elektroakustischen Wandlers festgelegt.

### Vorteile der Erfindung

Der erfindungsgemäße Ultraschallwandler mit den kennzeichnenden Merkmalen des Hauptanspruchs hat demgegenüber den Vorteil, daß durch den Stabilisierungsring an der Wandung des topfähnlichen Gehäuses eine größere Steifigkeit des Gehäuses erreicht wird, so daß der verbleibende Teil der Bodenfläche des Gehäuses als Schwingmembran wirkt, die vorzugsweise auf der Grundwelle schwingt. Besonders vorteilhaft ist, daß wegen der größeren Masse der Wandung auch die Nachschwingdauer der Schwingmembran verkürzt wird, so daß sich vorteilhaft insgesamt eine bessere Ausbreitungs- und Empfangskeule, sowie ein besseres Schwingverhalten ergibt. Insbesondere kann durch die verkürzte Nachschwingdauer eine Abstandsmessung, wie sie beispielsweise bei einer Einparkhilfe eines Kraftfahrzeuges auch bei sehr geringen Abständen zum Hindernis noch durchgeführt werden.

Durch die in den abhängigen Ansprüchen aufgeführten Maßnahmen sind vorteilhafte Weiterbildungen und Verbesserungen des im Hauptanspruchs angegebenen Ultraschallwandlers möglich. Besonders vorteilhaft ist, daß durch die entfernte Anordnung des Stabilisierungsringes von der Wandung der Schwingmembran erreicht wird, daß der Sensorkopf auf ein minimales Einbaumaß reduziert werden kann, so daß sich beispielsweise nach dem Einbau in eine Stoßstange ein optimales Erscheinungsbild ergibt, das nicht störend wirkt.

Der Stabilisierungsring wird bereits bei der Herstellung des Gehäuses gebildet, so daß die Herstellkosten relativ günstig sind.

Um die Ausbreitungskeule vorteilhaft zu formen, wird an der Außenseite der Wandung im Bereich der Schwingmembran ein Schallrichter angeordnet. Je nach Verwendungszweck kann der Schallrichter so ausgebildet werden, daß sich in der horizontalen eine möglichst breite Ausbreitungskeule und in der vertikalen Richtung eine möglichst schmale Ausbreitungskeule ergibt. Der Schallrichter ist als Ring ausgebildet und umschließt die Schwingmembran. Bei entsprechender Ausgestaltung des Schallrichters ist darüber hinaus auch vorteilhaft, die Reichweite des Ultraschallwandlers vorgebbar.

Um bevorzugt ein unauffälliges Erscheinungsbild zu geben, wird der Schallrichter mit der Ebene der Schwingmembran bündig ausgeführt. In alternativer Ausführungsform ist er jedoch auch kegelförmig ausgebildet, um die Ausbreitungs- und Empfangskeule der Ultraschallwellen noch stärker zu beeinflussen. Um bessere Einbaubedingungen zu schaffen, ist vorgesehen, den Querschnitt des Schallrichters entweder rechteckförmig oder kegelförmig auszubilden.

### Zeichnung

In der Zeichnung sind mehrere Ausführungsformen dargestellt und in der nachfolgenden Beschreibung näher erläutert. Die Figuren 1a, b, c zeigen unterschiedliche Ansichten eines ersten Ausführungsbeispiels, Figuren 2a, b, c zeigen ein zweites Ausführungsbeispiel, die Figuren 3a, b, c zeigen ein drittes Ausführungsbeispiel, die Figuren 4a, b, c zeigen ein viertes Ausführungsbeispiel und die Figuren 5a, b, c zeigen ein fünftes Ausführungsbeispiel.

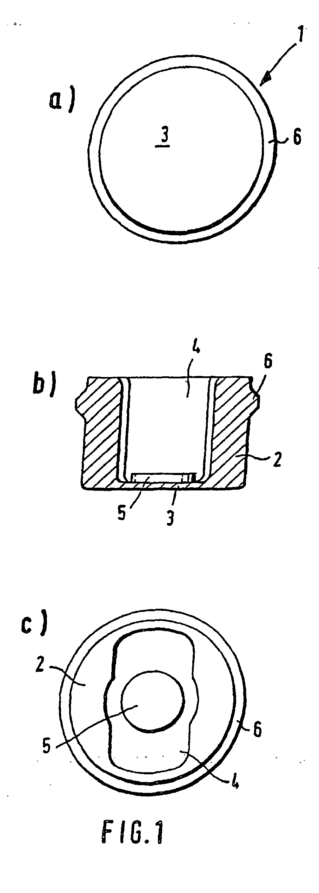

Bei dem ersten Ausführungsbeispiel zeigt Figur 1a einen Ultraschallwandler 1 in Draufsicht. Sichtbar ist der Topfboden, der als Schwingmembran 3 ausgebildet ist. An der Außenwandung ist ringförmig ein Stabilisierungsring 6 angeordnet. Figur 1b zeigt ein Schnittbild, bei dem der Ultraschallwandler 1 im Querschnitt dargestellt ist. Erkennbar ist ein topfähnliches Gehäuse mit einer relativ dicken Wandung 2, der Schwingmembran 3 als Topfboden und mit dem Stabilisierungsring 6. Auf der Innenseite ist auf dem Topfboden ein Schwingelement 5, vorzugsweise durch Kleben aufgebracht, so daß es einen guten mechanischen Kontakt zur Schwingmembran 3 hat. Der Innenraum des Gehäuses wird als Aussparung 4 bezeichnet. Figur c zeigt eine rückwärtige Draufsicht in das Gehäuse hinein. Die Aussparung 4 hat eine etwa rechteckförmige Querschnittsfläche, die gleichzeitig die Schwingmembran 3 begrenzt. Vollständigkeitshalber wird darauf hingewiesen, daß elektrische Zuleitungen zum Schwingelement 5 weggelassen wurden, um die Übersichtlichkeit zu wahren.

Bei den nachfolgend beschriebenen Ausführungsbeispielen werden die gleichen Bezugszeichen verwendet, wie sie für vergleichbare Teile beim ersten Ausführungsbeispiel vorgeschlagen wurden. Da der Aufbau der nachfolgenden Ausführungsbeispiele im wesentlichen identisch ist mit dem des ersten Ausführungsbeispiels, werden nur die wesentlichen Abweichungen näher erläutert. Die Darstellungsformen sind jedoch vergleichbar mit denen des ersten Ausführungsbeispieles.

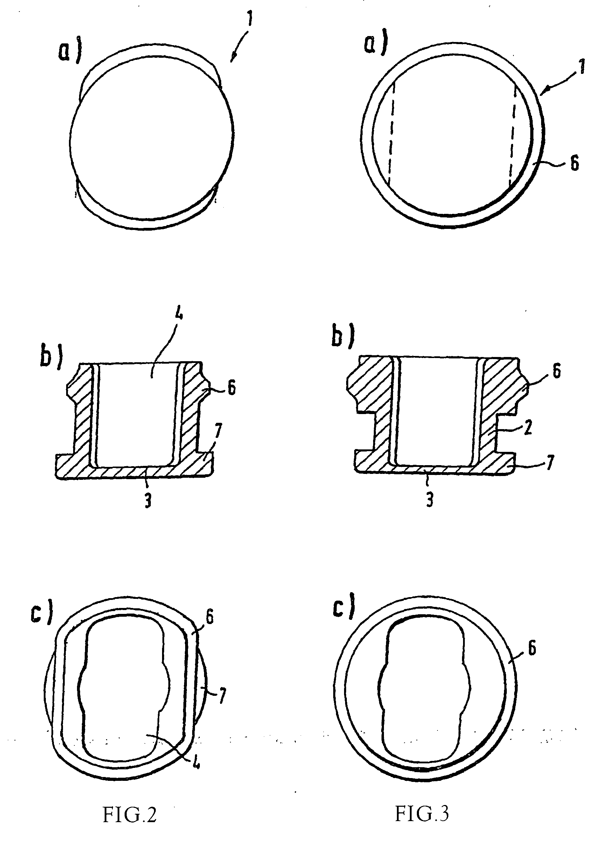

Beim zweiten Ausführungsbeispiel gemäß den Figuren 2a-c wird vorgeschlagen, den Stabilisierungsring 6 etwa oval in etwa parallel zur Querschnittsfläche der Aussparung 4 auszubilden. Die Wandung 2 ist somit im hinteren Teil etwa rechteckförmig geformt, während sie im Bereich der Schwingmembran 3 jedoch kreisrund ist. Die kreisrunde Struktur bildet einen Schallrichter 7, der eine Begrenzung der Schallwellen bewirkt. Der Schallrichter 7 ist bündig mit der Außenfläche Schwingmembran 3 ausgebildet und ist im Querschnitt rechteckförmig geformt. Die Abmessungen der einzelnen Elemente sind einerseits von der Arbeitsfrequenz abhängig, andererseits von den verfügbaren Einbaumaßen, beispielsweise im Stoßfänger eines Kraftfahrzeugs. Die Einzelmaße werden zweckmäßigerweise durch Vergleichsversuche ermittelt.

Die Ausführungsbeispiele gemäß der Figuren 3 - 5 sind aus dem Ausführungsbeispiel gemäß der Figur 2 hergeleitet. Das dritte Ausführungsbeispiel entspricht weitgehend dem zweiten Ausführungsbeispiel. Die Aussparung 4 ist etwa rechteckförmig ausgeführt. Der Stabilisierungsring ist allerdings rotationssymetrisch geformt und wesentlich stärker ausgebildet als beim zweiten Ausführungsbeispiel (Figur 3b).

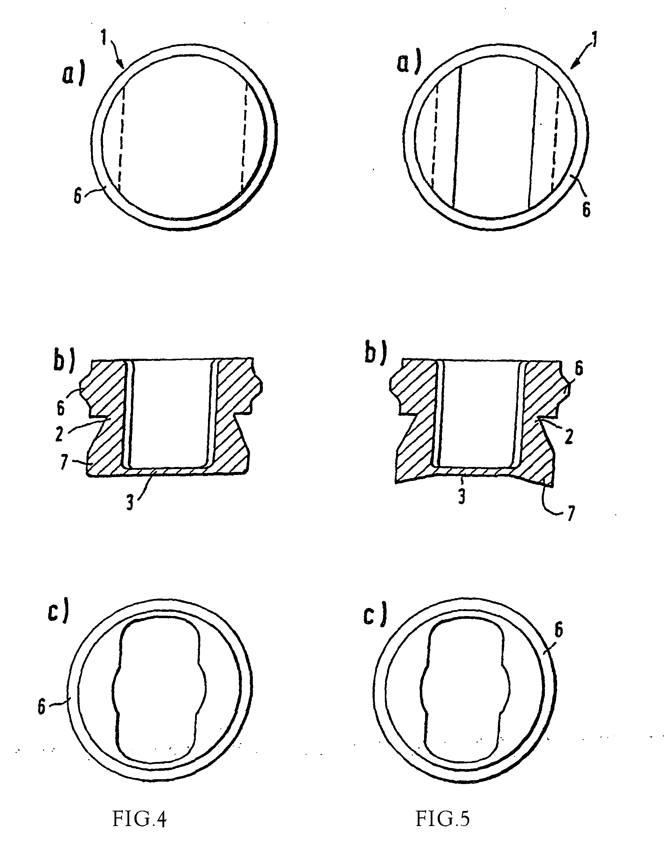

Das vierte Ausführungsbeispiel gemäß der Figuren 4a - c unterscheidet sich vom dritten Ausführungsbeispiel im wesentlichen durch die Einschnürung der Wandung 2. Der Schallrichter 7 ist auf seiner Rückseite kegelförmig ausgebildet. Dadurch wird teilweise eine akustische Abkoplung des hinteren Topfbereiches von der schwingenden Membran erreicht.

Beim fünften Ausführungsbeispiel gemäß der Figuren 5a-c ist darüber hinaus der Schallrichter 7 an der äußeren Grundfläche kegelförmig ausgebildet, so daß er in Verbindung mit der Schwingmembran 3 einen kleinen Trichter bildet. Dadurch ist die Ausbreitungs- und Empfangskeule noch stärker formbar. Darüber hinaus ist bei den Ausführungsbeispielen gemäß der Figuren 1- 5 durch die Einschnürung der Wandung 2 die Masse des ungewollt mitschwingenden Materials verkleinert, so daß die Abklingdauer (Nachschwingzeit) des Ultraschallwandlers nach dem Abschalten des Erregerimpulses vermindert wird. Dies hat zur Folge, daß der kleinste meßbare Abstand gegenüber bekannten Ultraschallsensoren kleiner wird, so daß sich dieser Sensor insbesondere für den Einbau in eine Einparkhilfe eignet, da mit ihm auch enge Raumverhältnisse vorteilhaft erfaßbar sind.

## Patentansprüche

1. Ultraschallwandler mit einem topfähnlichen Gehäuse mit einer ringförmigen Wandung und einer Bodenfläche als Schwingungsmembran, wobei auf der Innenseite der Bodenfläche ein Piezoelement als Schwingelement aufgebracht ist, wobei die Wandung (2) unterschiedliche Wandstärken aufweist und wobei nur ein Teil der äußeren Bodenfläche als Schwingungsmembran (3) wirkt, **dadurch gekennzeichnet, dass** an der Außenseite der Wandung (2) des Ultraschallwandlers (1) ein Stabilisierungsring (6) angeordnet ist, dass sich der Stabilisierungsring (6) über die übrige Wandung (2) erhebt und dass der Innenraum (4) des Gehäuses eine etwa rechteckförmige Querschnittsfläche aufweist, die die Schwingungsmembran (3) begrenzt.

2. Ultraschallwandler nach Anspruch 1, **dadurch gekennzeichnet, dass** der Stabilisierungsring (6) an der Wandung (2) von der Schwingungsmembran (3) entfernt angeordnet ist.

3. Ultraschallwandler nach Anspruch 1 oder 2, **dadurch gekennzeichnet, dass** der Stabilisierungsring (6) aus dem Material des Gehäuses besteht.

4. Ultraschallwandler nach einem der vorhergehenden Ansprüche, **dadurch gekennzeichnet, dass** im Bereich der Schwingungsmembran (3) an der Außenseite der Wandung (2) ein Schallrichter (7) angeordnet ist.

5. Ultraschallwandler nach Anspruch 4, **dadurch gekennzeichnet, dass** der Schallrichter (7) als Ring ausgebildet ist, der die Schwingungsmembran (3) umfasst.

6. Ultraschallwandler nach Anspruch 4 oder 5, **dadurch gekennzeichnet, dass** der Schallrichter (7) bündig mit der Schwingungsmembran (3) abschließt

7. Ultraschallwandler nach Anspruch 4 oder 5, **dadurch gekennzeichnet, dass** der Schallrichter (7) in Verbindung mit der Schwingungsmembran (3) einen Trichter bildet.

8. Ultraschallwandler nach einem der Ansprüche 4 bis 7, **dadurch gekennzeichnet, dass** der Schallrichter (7) in Bezug auf die Wandung (2) kegelförmig ausgebildet ist und die Wandung (2) einschnürt.

## Claims

1. Ultrasonic transducer having a pot-like housing with an annular wall and with a bottom face as a vibrational diaphragm, a piezoelectric element being attached as a vibrational element to the inside of the bottom face, the wall (2) having different wall thicknesses, and only part of the outer bottom face acting as a vibrational diaphragm (3), **characterized in that** a stabilizing ring (6) is arranged on the outside of the wall (2) of the ultrasonic transducer (1), **in that** the stabilizing ring (6) is elevated above the remaining wall (2), and **in that** the interior space (4) of the housing has an approximately rectangular cross-sectional area which bounds the vibrational diaphragm.

2. Ultrasonic transducer according to Claim 1, **characterized in that** the stabilizing ring (6) is arranged on the wall (2) at a distance from the vibrational diaphragm (3).

3. Ultrasonic transducer according to Claim 1 or 2, **characterized in that** the stabilizing ring (6) consists of the material of the housing.

4. Ultrasonic transducer according to one of the preceding claims, **characterized in that** a sound guide (7) is arranged in the region of the vibrational diaphragm (3) on the outside of the wall (2).

5. Ultrasonic transducer according to Claim 4, **characterized in that** the sound guide (7) takes the form of a ring which surrounds the vibrational diaphragm (3).

6. Ultrasonic transducer according to Claim 4 or 5, **characterized in that** the sound guide (7) terminates flush with the vibrational diaphragm (3).

7. Ultrasonic transducer according to Claim 4 or 5, **characterized in that** the sound guide (7), in conjunction with the vibrational diaphragm (3), forms a funnel.

8. Ultrasonic transducer according to one of Claims 4 to 7, **characterized in that** the sound guide (7) is designed conically with respect to the wall (2) and contracts the wall (2).

## Revendications

1. Transducteur d'ultrasons comportant un boîtier en forme de pot avec une paroi annulaire et une surface de fond comme membrane vibrante,
un élément piézoélectrique étant installé comme élément vibrant sur le côté intérieur de la surface du fond,
la paroi (2) ayant des épaisseurs différentes, et
seulement une partie de la surface extérieure du fond fonctionnant comme membrane vibrante (3),
**caractérisé en ce que**
un anneau de stabilisation (6) est prévu sur le côté extérieur de la paroi (2) du transducteur d'ultrasons (1) et
le transducteur (1) comporte une cavité (4) ayant une section à peu près rectangulaire.

2. Transducteur d'ultrasons selon la revendication 1,
**caractérisé en ce que**
l'anneau de stabilisation (6) est prévu sur la paroi (2), dans une position éloignée de la membrane vibrante (3).

3. Transducteur d'ultrasons selon les revendications 1 ou 2,
**caractérisé en ce que**
l'anneau de stabilisation (6) est réalisé dans la matière du boîtier.

4. Transducteur d'ultrasons selon l'une des revendications précédentes,
**caractérisé par**
un redresseur de son (7) au niveau de la membrane vibrante (3), sur le côté extérieur de la paroi (2).

5. Transducteur d'ultrasons selon la revendication 4,
**caractérisé en ce que**
le redresseur de son (7) est en forme d'anneau entourant la membrane vibrante (3).

6. Transducteur d'ultrasons selon les revendications 4 ou 5,
**caractérisé en ce que**
le redresseur (7) est à fleur avec la membrane vibrante (3).

7. Transducteur d'ultrasons selon les revendications 4 ou 5,
**caractérisé en ce que**
le redresseur (7) forme une trémie avec la membrane vibrante (3).

8. Transducteur d'ultrasons selon les revendications 4 à 7,
**caractérisé en ce que**
le redresseur de son (7) est en forme de cône par rapport à la paroi (2) et rétrécit la paroi (2).
